# EUROPEAN PATENT APPLICATION

(11) **EP 2 368 663 A1**
(43) Date of publication of application: **28.09.2011**
(21) Application number: 09827433.5
(22) Date of filing: 25.09.2009
(51) Int. Cl.: B23K 37/04, B23K 26/10, B23K 26/20, B23Q 3/18

(54) **WORKING DEVICE**

(30) Priority: 20.11.2008 JP 2008296750
(71) Applicant: IHI Corporation, Tokyo 135-8710 (JP)
(72) Inventor: MAENO, Jun, Tokyo 135-8710 (JP)
(74) Representative: Epping - Hermann - Fischer
(86) International application number: PCT/JP2009/066623
(87) International publication number: WO 2010/058652

(57) **Abstract**

In working equipment comprising a table (8), a positioning station (2) for fixing a workpiece on the table, and a working station (4) for performing a working process on the workpiece, the table (8) includes a stopper (16) for the workpiece to contact, a pressing member (20, 24) for pressing and thereby bringing the workpiece into contact with the stopper, and a fixing device (22, 26) for fixing the workpiece to the table, and the positioning station (2) includes a pressing actuator (48, 50) for moving the pressing member.

## Description

### Technical Field

This invention relates to working equipment suitable to be constructed as welding equipment for welding blanks together.

### Background Art

The applicant has been working on improvement of the working equipment disclosed in patent document 1. Specifically, the applicant has been working on development of working equipment in which a workpiece is fixed on a table, in a predetermined position, in a positioning station, then the table with the workpiece fixed on is moved to a welding station, and then welding is performed on the workpiece fixed on the table in the welding station. The development of such working equipment intends to reduce welding cycle time by synchronous operations in the plural stations.

Such working equipment requires at least as many workpiece fixing tables as the number of positioning stations plus the number of welding stations. The working equipment also requires a carry-out station, since the existence of a welding machine makes it difficult to carry a finished product directly out of the welding station. Further, it is preferable to return the table from which the finished product has been removed, to near the positioning station to hold it on standby, which may lead to an increase in the number of tables. If, in order to reduce the welding cycle time, the workpiece welding process is divided into plural steps and welding stations are provided for each step of welding, a further increased number of tables are required.

### Prior Art Document

### Patent Document

Patent document 1: Japanese Patent Application Laid-open No. Hei 8-290282 Publication

### Summary of the Invention

### Problem to be Solved by the Invention

In the above-mentioned working equipment, each table has a positioning stopper designed to project from the upper surface of the table and a pressing member for pressing and thereby bringing a workpiece into contact with the stopper, and in order to actuate the stopper and the pressing member, each table needs to have power- or fluid pressure-operated actuators, which leads to an increase in table size and overall costs.

The present invention has been made in consideration of the above problem. An object of the present invention is to provide working equipment which can minimize the number of power- or fluid pressure-operated actuators required to actuate the stoppers and the pressing members.

### Means for Solving the Problem

Working equipment according to the present invention recited in claim 1 comprises a table, a positioning station for fixing a workpiece on the table, in a predetermined position, and a working station for performing a working process on the workpiece on the table, wherein the table includes a stopper designed to project from the table for the workpiece to contact, a pressing member for pressing and thereby bringing the workpiece into contact with the stopper, and a fixing device for fixing the workpiece to the table, and the positioning station includes a pressing actuator for engaging with the pressing member and moving the pressing member in the direction of pressing the workpiece.

Working equipment recited in claim 2 is equipment of the type recited in claim 1 wherein the stopper is designed to be shiftable between an "use" position in which it projects from an upper surface of the table and a "rest" position in which it does not extend beyond the upper surface of the table, and the positioning station further includes a stopper actuator for engaging with the stopper and shifting the stopper between the "use" position and the "rest" position.

Working equipment recited in claim 3 is equipment of the type recited in claim 1 wherein the fixing device includes a magnetic clamp for magnetically attracting a workpiece made of a magnetic metal, at the bottom side of the workpiece.

Working equipment recited in claim 4 is equipment of the type recited in claim 1 wherein the positioning station further includes a positioning station base designed to be located under the table, and an up-and-down actuator provided under the positioning station base to move the positioning station base up and down, the positioning station base having a first engagement member for positioning the table in a position predetermined in connection with the positioning station base, the table further having an engagement counterpart member designed to engage with the first engagement member when the positioning station base is moved up by the up-and-down actuator, and the pressing actuator being provided on the positioning station base to be able to engage with the pressing member when the positioning station base is moved up.

Working equipment recited in claim 5 is equipment of the type recited in claim 4 wherein the working station includes a working station base designed to be located under the table, and an up-and-down actuator provided under the working station base to move the working station base up and down, the working station base having a second engagement member for positioning the table in a position predetermined in connection with the working station base, and the engagement counterpart member being designed to engage with the second engagement member when the working station base is moved up by the up-and-down actuator.

Working equipment recited in claim 6 is equipment of the type recited in claim 5 wherein the engagement counterpart member has an opening directed downward, which is formed, and the second engagement member has an upward-projecting truncated-cone portion designed to be received in the opening.

Working equipment recited in claim 7 is equipment of the type recited in claim 6 wherein the second engagement member has a large-diameter portion located under the truncated-cone portion and larger in diameter than the opening to allow the engagement counterpart member to be mounted on the large-diameter portion when the working station base is moved up, thereby enabling the table to be pushed up with the cylindrical portion seated on the large-diameter portion.

Working equipment recited in claim 8 comprises a table, a positioning station for butting plural plate-like blanks against each other on the table, in a predetermined position, and fixing the butted blanks to the table, and a welding station for performing welding on butt ends of the butted blanks on the table, wherein the table includes a stopper designed to project from the table for a first blank to contact, a first pressing member for pressing and thereby bringing the first blank into contact with the stopper, a first fixing device for fixing the first blank to the table, a second pressing member for pressing and thereby butting a second blank against the first blank fixed on the table, and a second fixing device for fixing the second blank to the table, and the positioning station includes a pressing actuator for engaging with the pressing member and moving the pressing member in the direction of pressing the workpiece, and a second pressing actuator for engaging with the second pressing member and actuating the second pressing member, when the table is located in the positioning station.

Working equipment recited in claim 9 is equipment of the type recited in claim 8 wherein the stopper is designed to be shiftable between a "use" position in which it projects from an upper surface of the table to be able to contact a butt end of the first blank and a "rest" position in which it does not extend beyond the upper surface of the table, and the positioning station further includes a stopper actuator for engaging with the stopper and shifting the stopper to the "use" position.

### Effect of the Invention

In the working equipment according to the present invention recited in claim 1, the table has a stopper for a workpiece to contact, a pressing member, and a fixing device for fixing the workpiece to the table, while a pressing actuator for moving the pressing member is provided in the positioning station. This obviates the need to provide a pressing actuator on each table, thereby minimizing the number of actuators.

In the working equipment recited in claim 2, a workpiece is positioned by the pressing member's pressing and thereby bringing the workpiece into contact with the stopper, then fixed to the table by the fixing device, and then the stopper is shifted to the position in which it does not extend beyond the upper surface of the table. Thus, the table is moved to the working station with the stopper not extending beyond the upper surface of the table, or in other words, not projecting from the upper surface of the table, which prevents the stopper from interfering with a working process, such as welding or cutting, performed in the working station. In addition, a stopper actuator for shifting the stopper is provided in the positioning station, which obviates the need to provide a stopper actuator on each table, thereby minimizing the number of actuators.

In the working equipment recited in claim 3, a workpiece made of a magnetic metal is fixed on the table by a magnetic clamp beneath its bottom. Thus, the fixing device does not project from the upper surface of the table with the workpiece fixed on, and therefore does not interfere with a working process, such as welding or cutting, performed in the working station.

In the working equipment recited in claim 4, when the positioning station base is moved up, the first engagement member engages with the engagement counterpart member of the table to ensure correct positioning of the table, and the pressing actuator engages with the pressing member. After the positioning of the table is completed in the positioning station, only by moving down the base, the first engagement member automatically disengages from the engagement counterpart member of the table and the pressing actuator disengages from the pressing member.

In the working equipment recited in claim 5, when the working station base is moved up, the second engagement member engages with the engagement counterpart member of the table to ensure correct positioning of the table.

In the working equipment recited in claim 6, the second engagement member engages with the engagement counterpart member with its truncated-cone portion received therein. This causes horizontal adjustment of the position of the table, thereby ensuring that the table is correctly positioned with respect to the horizontal direction, in connection with the working station base.

In the working equipment recited in claim 7, when the working station base is moved up, the engagement counterpart member (a cylindrical portion providing the opening) is mounted on the large-diameter portion of the second engagement member, which enables the table to be moved up to adjust a vertical distance between, for example a laser welding head and a workpiece in the working station.

In the working equipment recited in claim 8, after a first blank is positioned and fixed on the table, a second blank is positioned by pressing and thereby butting the second blank against the first blank, and then fixed. This enables the blanks to be butted against each other accurately, which is extremely advantageous to laser welding and other working processes requiring accurate butting. In addition, the first and second pressing actuators required for this positioning operation are both provided in the positioning station, which obviates the need to provide a first and a second pressing members on each table, thereby minimizing the number of actuators.

In the working equipment recited in claim 9, a first blank is positioned by being brought into contact with the stopper shifted to project from the upper surface of the table ("use" position). After the first blank is fixed, the stopper is shifted to a position in which it does not extend beyond the upper surface of the table ("rest" position). Then, a second blank is positioned by being butted against the first blank, with its butt end in contact with the butt end of the first blank, and then fixed. Thus, the blanks are correctly positioned on the table, with their butt ends, on which welding is to be performed, in a predetermined position. In addition, the stopper does not interfere with welding performed on the butt ends.

### Brief Description of the Drawings

FIG. 1 is a plan view showing overall structure of working equipment according to a first embodiment;
FIG. 2 schematically shows a positioning station 2 viewed in the direction of arrow II shown in FIG. 1;
FIG. 3 shows on an enlarged scale a positioning stopper 16 shown in FIG. 2,
FIG. 4 is a schematic front view for explaining an operation in the positioning station 2;
FIG. 5 is a schematic front view for explaining another operation in the positioning station 2;
FIG. 6 is a schematic front view for explaining another operation in the positioning station 2; and
FIG. 7 schematically shows a working station viewed in the direction of arrow VII shown in FIG. 1.

### Mode of Carrying out the Invention

Referring to the drawings attached, the best mode of carrying out the present invention will be described.

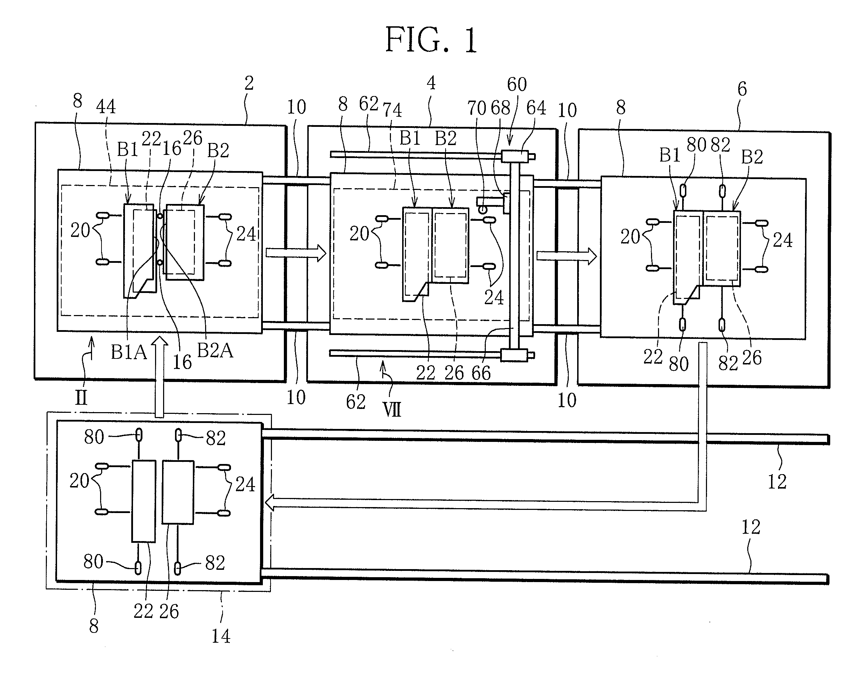

First, an embodiment of the present invention will be described according to FIGS. 1 to 7.

As shown in FIG. 1, the present working equipment comprises a positioning station 2, a working station 4, a carry-out station 6, and a pair of rails 10 extending across the stations to allow a workpiece fixing table 8, described below, to move across the stations 2, 4 and 6 serially. The working equipment also comprises another pair of rails 12 extending beside the series of the stations, from the carry-out station 6 to the positioning station 2. After a finished product is removed from a table 8 in the carry-out station 6, the table 8 is transferred onto the rails 12, into a position beside the carry-out station 6, by a conveyer or other suitable means, not shown. The table 8 is then moved on the rails 12 to a standby position 14 beside the positioning station 2. From the standby position 14, the table 8 is again transferred to the carry-in station 2 by a conveyer or other suitable means, not shown. Each table 8 has wheels W designed to run on the rails 10 and 12. In the illustrated example, the working equipment comprises four tables 8 in all, prepared according to the same specification.

The table 8 is designed to be suitable for butt welding of first and second blanks B1 and B2, collectively referred to as a workpiece. Specifically, the table 8 has a positioning stopper 16 intended to contact a butt end B1A of the first blank B1, a first pressing member 20 for pressing the first blank B1 to bring the butt end B1A of the first blank B1 into contact with the stopper 16, and a first fixing device in the form of a magnetic clamp 22 for fixing the first blank B1 to the table 8. The table 8 further has a second pressing member 24 for pressing the blank B2 to bring the butt end B2A of the blank B2 into contact with the butt end B1A of the first blank B1 fixed on the table 8, and a second fixing device in the form of a magnetic clamp 26 for fixing the second blank B2 to the table 8.

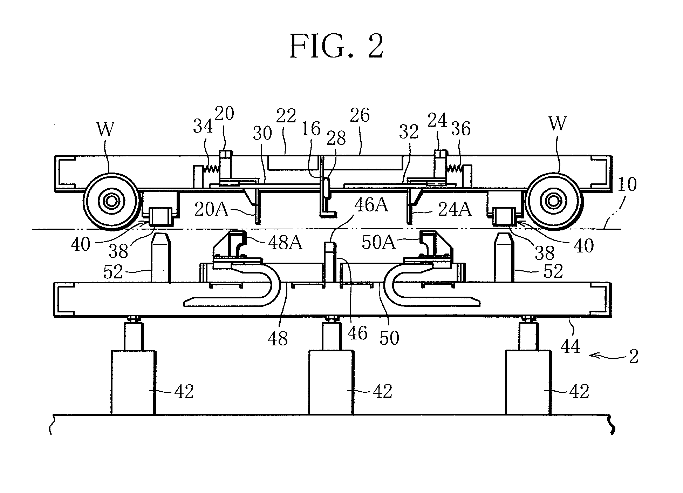

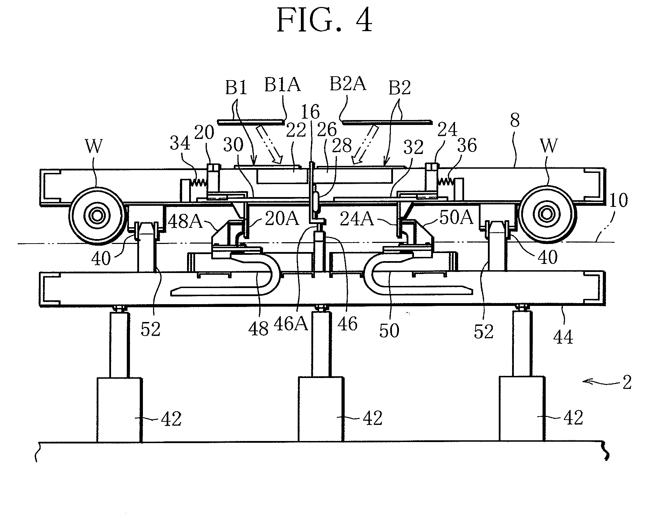

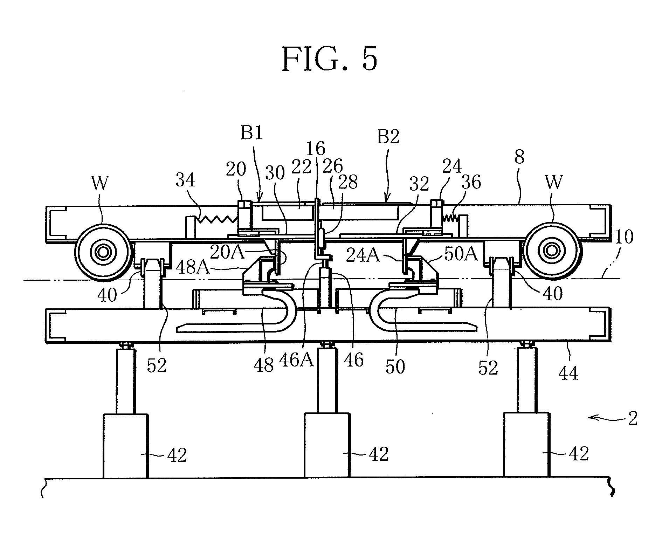

The positioning stopper 16 is shiftable between a "use" position in which it projects from the upper surface of the table 8 and allows the blank B1 to contact it (see FIGS. 4 and 5) and a "rest" position in which it does not extend beyond the upper surface of the table 8 (see FIGS. 2, 6 and 7). The positioning stopper 16 is fitted to a guide 28 attached to the table 8.

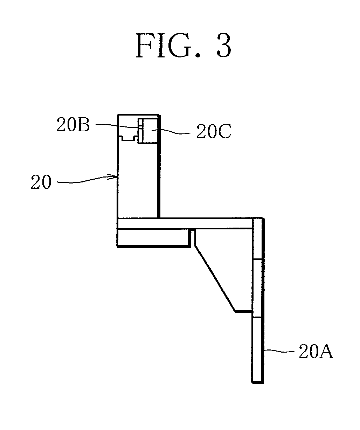

The first pressing member 20 is fitted to a guide 30 attached to the table 8 to be able to press the first blank B1 on the table 8. The first pressing member 20 has a pair of engagement portions 20A projecting downward from the table 8. The first pressing member 20 also has a pair of portions each having a contact 20C set on a spring 20B, and is intended to contact the first blank B1 at the two contacts 20C (see FIG. 3). Similarly, the second pressing member 24 is fitted to a guide 32 to be able to press the blank B2 on the table 8. The second pressing member 24 has a pair of engagement portions 24A projecting downward from the table 8. Similarly to the first pressing member 20, the second pressing member 24 also has a pair of portions each having a contact (not shown) set on a spring, and is intended to contact the blank B2 at the two contacts. Springs 34 and 36, each attached to the table 8 at one end, are attached to the first and second pressing members 20, 24, respectively, so that the first and second pressing members 20, 24 will be returned to their initial positions by virtue of restoring forces of the springs 34 and 36 (see FIG. 2).

The magnetic clamps 22 and 26 are arranged in the upper surface of the table 8. The first and second blanks B1 and B2 are fixed to the table 8 by being attracted by magnetic forces generated by the magnetic clamps 22, 26 beneath their bottoms, respectively. The magnetic clamps 22 and 26 each include an ordinary permanent magnet, a polarity reversible magnet, and a magnet coil for reversing the polarity of the polarity reversible magnet. The surface of each magnetic clamp can be caused to exert or stop exerting a magnetic force by supplying or not supplying a current to the magnet coil. In the positioning and working stations 2 and 4, a current is supplied or ceases to be supplied to the magnet coils to activate or stop activating the magnetic clamps 22 and 26. For this, a noncontact power-supply device (not shown) is provided in each of the stations 2 and 4 to supply a control current to the table 8 to control the magnetic clamps 22 and 26.

The table 8 has engagement counterpart members 40 on its underside, each in the shape of a cylinder with an opening 38 directed downward.

The positioning station 2 has a positioning station base 44 to be moved up and down by an up-and-down actuator 42. The positioning station base 44 has a stopper actuator 46 for pushing the positioning stopper 16 up into its "use" position, a first pressing actuator 48 for actuating the first pressing member 20, and a second pressing actuator 50 for actuating the second pressing member 24. The positioning station base 44 also has first engagement members 52 each engageable with the corresponding engagement counterpart member 40 having an opening 38 of the table 8. Each first engagement member 52 has an upward-directed truncated-cone portion.

In the positioning station 2, with the base 44 moved down as shown in FIG. 2, none of the stopper actuator 46, the first and second pressing actuators 48 and 50 and the engagement members 52 interfere with the table 8 moving on the rails 10. In the positioning station 2, with the base 44 moved up, the first engagement members 52 each engage with the corresponding engagement counterpart member 40 with their truncated-cone portion received in the opening 38, which positions the table 8 in a position predetermined with respect to the horizontal direction, in connection with the base 44 (see FIG. 4). Further, the stopper actuator 46 is driven so that its drive portion 46A shifts the positioning stopper 16 to its "use" position. Further, drive portions 48A and 50A of the actuators 48 and 50 engage with the engagement portions 20A and 24A of the pressing members 20 and 24, respectively, to be able to press the pressing members 20 and 24.

The working station 4 has a laser welding unit 60 (see FIG. 1). The laser welding unit 60 includes two rails 62 extending on each side of the working station 4, parallel to the rails 10, two posts 64 slid on the two rails 62, respectively, a rail 66 extending between the two posts 64, at right angles to the rails 62, a slider 68 slid on the rail 66, and a welding head 70 attached to the slider 68 to emit a laser beam. The position of the posts 64 on the rails 62 and the position of the slider 68 on the rail 66 are controlled by a controller, not shown, according to the position of welding.

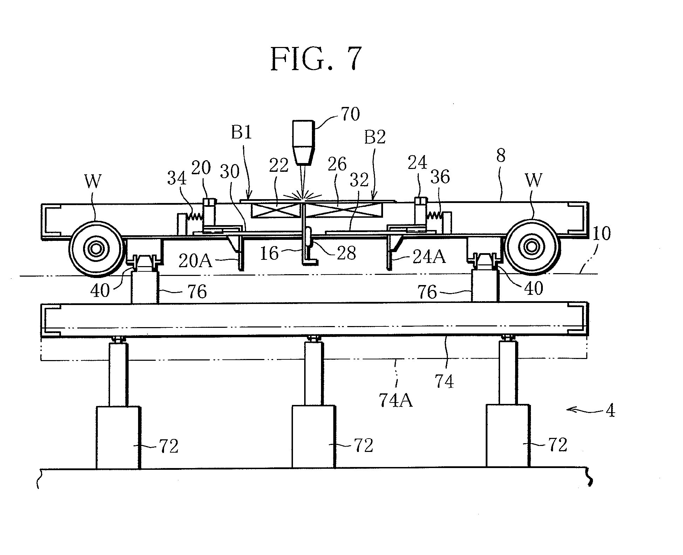

The working station 4 also has a working station base 74 to be moved up and down by an up-and-down actuator 72 (see FIG. 7). The working station base 74 has second engagement members 76 projecting upward. Each second engagement member 76 includes a truncated-cone portion designed be received in the opening 38 of the corresponding engagement counterpart member 40 of the table 8, and a large-diameter portion located under the truncated-cone portion and larger in diameter than the opening 38. As seen in FIG. 7, when the base 74 is moved up by the up-and-down actuator 72, first, each engagement member 76 engages with the corresponding engagement counterpart member of the table 8 with the truncated-cone portion received in the opening 38, which positions the table 8 in a position predetermined with respect to the horizontal direction, in connection with the base 74. The base 74 is further moved upward by the up-and-down actuators 72 so that the edge of the opening 38 of each engagement counterpart member 40 gets on the large-diameter portion of the corresponding second engagement member 76, which allows the table 8 to be moved up with the working station base 74.

Next, how the working equipment operates will be described. First, a table 8 is transferred from the standby position 14 (see FIG. 4). Next, in the positioning station 2, the base 42 is moved up by the up-and-down actuator 42 to cause the first engagement members 52 to engage with the engagement counterpart members 38 of the table 8 to position the table 8 in a position predetermined with respect to the horizontal direction, in connection with the positioning station 2. At this stage, the wheels W of the table 8 are on the rails 10. Next, the positioning stopper 16 is caused to project from the table 8 by the stopper actuator 46. The positioning stopper 16 projecting this way is in its "use" position. Then, by a robot or other carrying-in device, not shown, a first blank B1 is placed on the table 8, between the stopper 16 and the first pressing member 20, and a second blank B2 is placed on the table 8, between the stopper 16 and the second pressing member 24. The blanks B1 and B2 may be placed on the table 8 before the positioning stopper 16 is shifted to the "use" position.

Next, as seen in FIG. 5, the first blank B1 is positioned with its butt end B1A in contact with the stopper 16. This positioning operation is performed by the first pressing actuator 48's pressing the first pressing member 20, thereby pressing the blank B1. With this positioning operation, the positioning of the blank B1 is completed. The blank B1 is then fixed to the table 8 by the magnetic clamp 22.

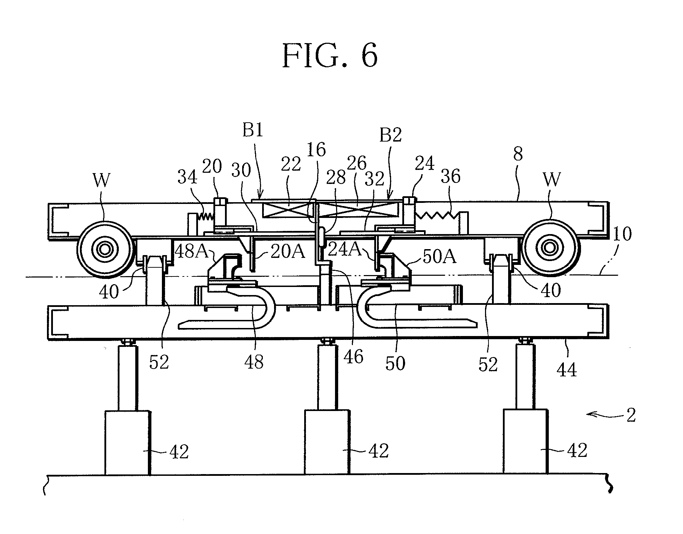

Next, as seen in FIG. 6, the positioning stopper 16 is moved down by the actuator 46 to the position in which it does not extend beyond the upper surface of the table 8, and the second blank B2 is butted against the first blank B1 with the butt end B2A in contact with the butt end B1A. This butting operation is performed by the second pressing actuator 50's pressing the second pressing member 24, thereby pressing the blank B2. With this butting operation, the positioning of the blank B2 is completed. The blank B2 is then fixed to the table 8 by the magnetic clamp 26.

After the above process is completed in the positioning station 2, the base 44 is moved down by the up-and-down actuator 42, which causes the first engagement members 52 to disengage from the engagement members 40, and thus allows the table 8 to be moved from the positioning station 2 to the working station 4.

Then, the table 8 with the blanks B1 and B2 fixed to the upper surface is moved on the rails 10 to the working station 4 by a moving device not shown. In the working station 4, the base 74 is moved up by the up-and-down actuator 72 as seen in FIG. 7. This causes the second engagement members 76 to engage with the engagement counterpart members 38 of the table 8, which positions the table 8 in a position predetermined with respect to the horizontal direction, in connection with the working station 4. In this state, the base 74 is further moved up by the up-and-down actuator 72, which causes the edge of the opening 38 of each engagement counterpart member 40 to be mounted on the large-diameter portion of the corresponding second engagement member 76, and thus allows the table 8 to be moved up with the base 74 to adjust a vertical distance between the welding head 70 of the laser welding unit 60 and the blanks B1 and B2 on the table 8.

Then, the welding head 70 is moved to emit a laser beam along the butting line between the blanks B1 and B2, to butt-weld the blanks B1 and B2. After the welding is completed, the magnetic clamps 22 and 26 are deactivated to stop attracting the blanks B1 and B2.

After the above process is completed in the working station 4, the base 74 is moved down by the up-and-down actuator 72 as indicated by two-dot chain lines 74A (see FIG. 7). This causes the second engagement members 76 to disengage from the engagement counterpart members 40, and thus allows the table 8 to be moved from the working station 4.

Then, the table 8 is moved on the rails 10 to the carry-out station 6 by a moving device (not shown), with the welded blanks B1 and B2 (hereinafter referred to as a finished product) on. In the carry-out station, the finished product is carried out by a robot or other carrying-out device not shown. After the finished product is carried out, the table 8 is returned to the standby position 14.

As stated above, the present working equipment includes four tables 8, and the processes in the three stations 2, 4, 6 are performed in synchronization. Specifically, carrying-in, positioning and fixing of blanks B1 and B2 in the positioning station 2, welding of blanks B1 and B2 in the working station 4, and carrying-out in the carry-out station 6 are performed concurrently.

Next, advantages of the present working equipment will be discussed. As stated above, in the present working equipment, the processes in the three stations 2, 4, 6 are performed in synchronization to achieve a reduction in working cycle time. For this purpose, four tables 8 are prepared. Each table 8 has a positioning stopper 16 for a first blank B1 to contact, a first pressing member 20 for pressing the blank B1, and a second pressing member 24 for pressing a second blank B2. A stopper actuator 46 for moving the positioning stopper 16 up and down, and actuators 48 and 50 for actuating the first and second pressing members 20 are provided on a positioning station base 44 in the positioning station 2, and thus, each table 8 does not need to have these actuators. As a result, an increase in table 8 size is avoided, the number of actuators is minimized, and overall costs are reduced.

The blanks B1 and B2 are fixed to the table by the magnetic clamps 22 and 26 beneath their bottoms. This means that the fixing devices for fixing the blanks B1 and B2 do not project upward from the table 8 with the blanks B1 and B2 fixed on, and hence, do not interfere with welding in the working station 4.

In the positioning station 4, when the positioning station base 44 is moved up, the first engagement members 52 of the positioning station base 44 engage with the engagement counterpart members 40 of the table 2 to ensure correct positioning of the table 8, and the drive portions 48A and 50A of the pressing actuators 48 and 50 engage with the engagement portions 20A and 24A of the pressing members 20 and 24. After the process is finished in the positioning station 4, only by moving down the base 44, the first engagement members 52 disengage from the engagement counterpart members 40 of the table 8 and the pressing actuators disengage from the pressing members.

Next, how first and second blanks B1 and B2 are positioned will be described. First, a first blank B1 is positioned with the butt end B1A in contact with the positioning stopper 16 in the "use" position. Then, the first blank B1 is fixed, and then the stopper 16 is shifted to the "rest" position. Next, a second blank B2 is positioned with the butt end B2A in contact with the butt end B1A of the first blank B1. As a result, the butt ends B1a and B2a of the blanks B1 and B2, on which welding is to be performed, are located accurately in a predetermined position on the table 8, and the stopper 16 is prevented from interfering with butt-welding of the blanks B1 and B2.

In the above, an embodiment of the present invention has been described. The present invention is however not limited to the above embodiment. For example, in the above embodiment, a table 8 to be held in the standby position 14 may be omitted. In this case, when the tables having experienced the processes in the stations 2 and 4 are moved to the subsequent stations, respectively, the table having experienced the process in the carry-out station 6 is moved directly to the positioning station 2.

Although the above-described embodiment has a single working station 4, the working equipment may comprise plural working stations. In this case, one more table 8 is added. The working equipment may comprise a second positioning station subsequent to the working station 4, for carrying in and positioning a third blank to be welded to the second blank, and a second working station for welding the third blank to the second blank. In this case, two more tables 8 are added.

In the described embodiment, the fixing devices provided on the table are magnetic clamps 22 and 26, but they may be publicly-known mechanical clamps.

In the described embodiment, each table 8 may have guide members for ensuring that blanks B1 and B2 are positioned correctly with respect to the width direction, or direction at right angles to the direction of the pressing members 22 and 24's pressing in FIG. 1. Specifically, as seen only in the tables 8 in the carry-out station 6 and the standby position 14 in FIG. 1, each table may have a guide member 80 for ensuring that a first blank B1 is positioned widthwise-correctly, and a guide member 82 for ensuring that a second blank B2 is positioned widthwise-correctly. As seen in the Figure, the guide members 80 and 82 are designed to be shiftable between a "use" position in which they contact the first and second blanks B1, B2, respectively, and a "non-use" position away from the "use" position. Similarly to the pressing members 20 and 24, the guide members 80 and 82 are shifted by actuators, not shown, provided in both the positioning station 2 and the working station 4.

The present invention is applicable to, for example cutting equipment in which a workpiece is positioned and fixed to a table in a positioning station, and subjected to cutting in a subsequent working station.

### Explanation of Reference Numerals

- 2:: Positioning station
- 4:: Working station
- 6:: Carry-out station
- 8:: Table
- 16:: Positioning stopper
- 20,: 24: Pressing member
- 40:: Engagement counterpart member
- 42:: Up-and-down actuator
- 44:: Positioning station base
- 48,: 50: Pressing actuator
- 52:: First engagement member
- 60:: welding unit
- 70:: Welding head
- 72:: Up-and-down actuator
- 74:: Working station base
- 72:: Second engagement member

## Claims

1. Working equipment, comprising
a table,
a positioning station for fixing a workpiece on the table, in a predetermined position, and
a working station for performing a working process on the workpiece on the table, wherein
the table includes
a stopper designed to project from the table for the workpiece to contact,
a pressing member for pressing and thereby bringing the workpiece into contact with the stopper, and
a fixing device for fixing the workpiece to the table, and
the positioning station includes
a pressing actuator for engaging with the pressing member and moving the pressing member in the direction of pressing the workpiece.

2. The working equipment according to claim 1, wherein
the stopper is designed to be shiftable between a "use" position in which it projects from an upper surface of the table and a "rest" position in which it does not extend beyond the upper surface of the table, and
the positioning station further includes an stopper actuator for engaging with the stopper and shifting the stopper between the "use" position and the "rest" position.

3. The working equipment according to claim 1, wherein
the fixing member includes a magnetic clamp for magnetically attracting a workpiece made of a magnetic metal, at the bottom side of the workpiece.

4. The working equipment according to claim 1, wherein the positioning station further includes a positioning station base designed to be located under the table, and
an up-and-down actuator provided under the positioning station base to move the positioning station base up and down,
the positioning station base having a first engagement member for positioning the table in a position predetermined in connection with the positioning station base,
the table further having an engagement counterpart member designed to engage with the first engagement member when the positioning station base is moved up by the up-and-down actuator, and
the pressing actuator being provided on the positioning station base to be able to engage with the pressing member when the positioning station base is moved up.

5. The working equipment according to claim 4, wherein the working station includes
a working station base designed to be located under the table, and
an up-and-down actuator provided under the working station base to move the working station base up and down,
the working station base having a second engagement member for positioning the table in a position predetermined in connection with the working station base, and
the engagement counterpart member being designed to engage with the second engagement member when the working station base is moved up by the up-and-down actuator.

6. The working equipment according to claim 5, wherein
the engagement counterpart member has an opening directed downward, which is formed, and
the second engagement member has an upward-projecting truncated-cone portion designed to be received in the opening.

7. The working equipment according to claim 6, wherein
the second engagement member has a large-diameter portion located under the truncated-cone portion and larger in diameter than the opening to allow the engagement counterpart member to be mounted on the large-diameter portion when the working station base is moved up, thereby enabling the table to be pushed up with the cylindrical portion seated on the large-diameter portion.

8. Working equipment, comprising
a table,
a positioning station for butting plural plate-like blanks against each other on the table, in a predetermined position, and fixing the butted blanks to the table, and
a welding station for performing welding on butt ends of the butted blanks on the table, wherein
the table includes
a stopper designed to project from the table for a first blank to contact,
a first pressing member for pressing and thereby bringing the first blank into contact with the stopper,
a first fixing device for fixing the first blank to the table,
a second pressing member for pressing and thereby butting the second blank against the first blank fixed on the table, and
a second fixing device for fixing the second blank to the table, and
the positioning station includes
a pressing actuator for engaging with the pressing member and moving the pressing member in the direction of pressing the workpiece, and
a second pressing actuator for engaging with the second pressing member and actuating the second pressing member, when the table is located in the positioning station.

9. The working equipment according to claim 8, wherein
the stopper is designed to be shiftable between a "use" position in which it projects from an upper surface of the table to be able to contact a butt end of the first blank and a "rest" position in which it does not extend beyond the upper surface of the table, and the positioning station further includes a stopper actuator for engaging with the stopper and shifting the stopper to the "use" position.
